# EUROPEAN PATENT SPECIFICATION

(11) **EP 3 899 760 B1**
(45) Date of publication and mention of the grant of the patent: **18.10.2023**
(21) Application number: 18833142.5
(22) Date of filing: 19.12.2018
(51) Int. Cl.: G06F 21/10, G06F 21/12

(54) **APPARATUS AND METHOD FOR LICENSE ACTIVATION**
VORRICHTUNG UND VERFAHREN ZUR LIZENZAKTIVIERUNG
APPAREIL ET PROCÉDÉ POUR L'ACTIVATION D'UNE LICENCE

(43) Date of publication of application: 27.10.2021
(73) Proprietor: Unify Patente GmbH & Co. KG, 81739 München (DE)
(72) Inventor: TSAKIRIS, Georgios, 14231 Nea Ionia (GR); KALLIGERIS, Myronas, 14671 N. Erthraia (GR); TZANETATOS, Gerasimos, 17341 A.Dimitrios (GR); GANOTIS, Ioannis, 16673 Voula (GR); KALLIPOLITIS, Dimitris, 57010 Pefka (GR); CHANEY, Charles, Parkland, Florida 33067 (US); MORA, Gary, Edgewater, Florida 32132 (US)
(74) Representative: Schaafhausen Patentanwälte PartGmbB
(86) International application number: PCT/US2018/066421
(87) International publication number: WO 2020/131045

(56) References cited:
- WO-A2-01/74138
- US-A1- 2005 289 074
- US-A1- 2007 112 684

## Description

### FIELD OF THE INVENTION

The present innovation relates to use of telecommunications equipment (e.g. computers, telephones, etc.). For example, embodiments of the present innovation can relate to an apparatus and method for activating a license so that a telecommunication device can be utilized in connection with one or more telecommunication related services that are providable via at least one application associated with the license.

### BACKGROUND OF THE INVENTION

Licensing of an application that helps define or provide a service via telecommunications equipment running the application or a portion of the application can often be a complicated process. In many cases, the licensing process at an enterprise level can be performed in which an enterprise seeks to ensure the licensing of its different equipment for various services is up to date and accurate is performed via an online service or via a manual administration by a defined system administrator. Such licensing efforts can also require involvement of the application provider that may help the enterprise utilize such services and the use of license files that may be created for storage on the non-transitory memory of at least one enterprise server that may host the application or service for the enterprise. In some instances, use of a license file is configured to bind with only one instance of a server to avoid license fraud. But, we have determined that such a requirement may not be effective at limiting license fraud as virtual environments where applications can be deployed could allow such a license file binding restriction to be easily avoided.

Further, license activation so that an enterprise may start providing a service associated with a license for a particular application or application feature that may be hosted by a server can be complicated and error prone. An enterprise system administrator may need to gather a large amount of requirement information to prepare and file an order with the application provider who will use such information to generate one or more appropriate license files for providing to the enterprise for subsequent installation, activation and use so that the application or an application feature can be run on the appropriate enterprise telecommunication equipment.

These types of licensing problems can arise in conjunction with telecommunication services that may be application driven via one or more servers that host a particular service. These issues can also be present in networks that utilize other types of telecommunication services, such as telecommunication services involving use of a private branch exchange.

Examples of licensing methods can be appreciated from U.S. Patent Application Publication Nos. 2004/0199760, 2006/0064387, 2008/0082450, and 2017/0293745, U.S. Pat. Nos. 7,222,367 and 9,386,166, International Publication Nos. WO 2013/127411 and WO 2005/043816, and European Patent Publication No. EP 2 820 598 A1. Some communication systems in which licenses are utilized in conjunction with providing different telecommunication services to different telecommunication devices can utilize a private branch exchange (also referred to as a PBX), a call server, or other type of telecommunication equipment (e.g. at least one switch, conference server, etc.). An example of a telecommunication system in which a PBX is included can be appreciated from U.S. Pat. Nos. 7,206,384 and 7,200,218. An example of a communication system that utilizes telecommunication equipment for a Voice Over Internet Protocol (VoIP) system can be appreciated from U.S. Pat. App. Pub. No. 2005/0267955.

US 2005/289074 relates to a system for updating license cache memory. A license cache memory is described that is associated with a client device for the storage and retrieval of licensing records. A request generator generates a licensing request responsive to a licensing event and receives license information responsive to the request over an IP-compliant network. Licensing information is stored in the licensing cache memory and the client is operated accordingly. The license request message is sent by the client module to the licensing server. US 2007/112684 relates to a license server that may operate even an IP-compliant network. The license server includes a database for storing and retrieving license records associated with a client software application. The license server may be configured to receive a license validity inquiry request from a client module over the IP-compliant connection that includes information regarding a client software application associated with the client module. The server may then query the database to determine whether a valid license exists for the client software application. Responsive to the query, the license server may form a response message containing the results of the query and send a response message to the client module over the IP-compliant network.

WO 01/74138 relates to a system for enterprises to efficiently comply with software licensing requirements through a distributed software licensing architecture is presented. The distributed software licensing system includes at least one license server to receive and process licensing requests from enterprise servers or computers executing various software applications that are subject to licenses. The licensing system enforces licensed usage of software within the enterprise while maximizing efficient allocation and distribution of software licenses. We have determined that problems in licensing distribution and activation can often occur due to communication protocols that are used by different enterprise network elements. For example, high security environments that are often used by government organizations or banks to access internet services (e.g. cloud based services) often restrict access to such services for security reasons. Other enterprise operators may also block such internet traffic or highly restrict such traffic. Such actions can help isolate the enterprise network from the internet or other public network. Such actions can also be used to exploit a vulnerability of a license activation process so that a particular application license can be re-used multiple times on different server instances in a way that the application provider could view as improper.

### SUMMARY OF THE INVENTION

We determined that a new method and apparatus for license validation, which can be utilized to activate application or application upgrades on at least one telecommunication device (e.g. a private branch exchange, server that hosts at least one service that is providable via at least one application run on the sever, etc.). Embodiments of the method and the apparatus can be configured so that communication between the license server and the telecommunication device can avoid being blocked by an enterprise network firewall, proxy, and/or other border control device configured to prevent particular pre-defined data traffic into and out of the enterprise network according to a pre-specified set of network protection rules. Embodiments using this approach can permit the licensing related communications to occur without detrimentally affecting the enterprise network's design configuration used to help isolate the enterprise network and protect that network.

A method for validation of a license associated with an application stored on a non-transitory computer readable medium of a telecommunication device can include: collecting, by the telecommunication device, license validation information for validation of a license associated with the application; and the telecommunication device sending a license request message to a license server where the license request message comprises the collected license validation information, characterized in that the license request message is structured as a SIP MESSAGE that has a header and a body, wherein the header includes the address of the license server, and wherein the body includes a body that is formatted to be compliant with SIP and also comply with the Multipurpose Internet Mail Extension (MIME) specification.

Embodiments of the method can also include other steps. For example, upon validation of the license based on the license validation information included in the license request message, the license server can send a license response message to the telecommunication device to enable use of the application or at least one upgrade feature of the application. The license response message can have license validation data based on the license validation information included in the license request message and/or license file content data for generation of a license file for validation of the license identified in the license request message.

The license request message can include a single message or a series of message. The license response message can include a single message or a series of messages as well. The license request message can be sent to the license server in a format that complies with a pre-selected communication protocol so that the license request message is transmittable out of an enterprise network in which the telecommunication device is connected via a communication pathway between the telecommunication device and the license server without being blocked by a firewall of the enterprise network and/or a proxy of the enterprise network and/or another type of border control device of the enterprise network. For some preferred embodiments, the pre-selected communication protocol can be Session Initiation Protocol (SIP) or another type of application layer protocol. The pre-selected communication protocol may not be a Hypertext Transfer Protocol (HTTP).

The license response message that the license server can send can be sent as a single message or may be a series of messages. The license response message can be sent to the telecommunication device in a format that complies with the pre-selected communication protocol so that the license response message is transmittable into the enterprise network in which the telecommunication device is connected via the communication pathway between the telecommunication device and the license server without being blocked by the firewall of the enterprise network and/or the proxy of the enterprise network. The pre-selected communication protocol can be SIP in some preferred embodiments. The pre-selected communication protocol may be selected so that it is not a Hypertext Transfer Protocol (HTTP).

The communication pathway between the license server and the telecommunication device can include at least one public network between the enterprise network and the license server. For example, the communication pathway can include at least one SIP trunk and/or at least one SIP gateway.

In some embodiments, the telecommunication device can be a private branch exchange (PBX), a terminal device, or a server computer device. The license server can be a computer device having a processor connected to a non-transitory memory or other type of non-transitory computer readable medium. The license server can also include other hardware.

A non-transitory computer readable medium having code stored thereon is also provided. The code stored on the computer readable medium can define a method that is performed by a telecommunication device when a processor of the telecommunication device runs the code. The method that is defined can include: collecting, by the telecommunication device, license validation information for validation of a license associated with the application; and the telecommunication device sending a license request message to a license server where the license request message comprises the collected license validation information, characterized in that the license request message is structured as a SIP MESSAGE that has a header and a body, wherein the header includes the address of the license server, and wherein the body includes a body that is formatted to be compliant with SIP and also comply with the Multipurpose Internet Mail Extension (MIME) specification.

In other embodiments of the non-transitory computer readable medium, the code stored on the computer readable medium can define a method that is performed by a license server when a processor of the license server runs the code. The method that is defined can include: upon validation of a license based on the license validation information included in a license request message received from a telecommunication device, the license server sending a license response message to the telecommunication device to enable use of the application or at least one upgrade feature of the application. The license response message can have license validation data based on the license validation information included in the license request message and/or license file content data for generation of a license file for validation of the license identified in the license request message.

A licensing apparatus is also provided. Embodiments of the licensing apparatus can be configured to implement an embodiment of the method for validation of a license. The apparatus can include a license server having a processor connected to a non-transitory compute readable medium. The license server can be communicatively connectable to at least one telecommunication device. The license server can be configured to respond to a license request message received from the telecommunication device by using validation information included in the license request message to validate a license associated with an application or at least one feature of the application and, upon validation of the license based on the license validation information included in the license request message, send a license response message to the telecommunication device to enable use of the application or at least one upgrade feature of the application. The license response message can have license validation data based on the license validation information included in the license request message. The license validation data can be license file content data and/or other license validation data. The license server can be configured to generate the license response message so the license response message is sendable to the telecommunication device in a format that complies with a pre-selected communication protocol so that the license response message is transmittable into an enterprise network in which the telecommunication device is connected via a communication pathway between the telecommunication device and the license server without being blocked by a firewall of the enterprise network and/or a proxy of the enterprise network and/or a session border control (SBC) device of the enterprise network.

The telecommunication device can be configured to send the license request message so that the license request message is sendable to the license server in the format that complies with the pre-selected communication protocol so that the license request message is transmittable out of the enterprise network in which the telecommunication device is connected via the communication pathway between the telecommunication device and the license server without being blocked by the firewall of the enterprise network and/or the proxy of the enterprise network and/or an SBC device of the enterprise network.

For embodiments, the pre-selected communication protocol can be Session Initiation Protocol (SIP) or an application layer protocol. The communication pathway can include at least one public network between the enterprise network and the license server where the communication pathway includes at least one SIP trunk and/or at least one SIP gateway.

The license request message and, in some embodiments, the license response message can each be generated to be a SIP MESSAGE or a series of SIP MESSAGEs. The body of such messages can include an XML structure and/or plain text data to provide the license validation information for a license request message. The body of such messages for a license response message can include file content data for generation and use of a license file in at least one XML structure and/or validation information for validation of a license file as at least one XML structure and/or plain text data within the body of the message.

Other details, objects, and advantages of the apparatus will become apparent as the following description of certain exemplary embodiments thereof proceeds.

### BRIEF DESCRIPTION OF THE DRAWINGS

Exemplary embodiments of an apparatus for license activation and methods of making and using the same are shown in the drawings included herewith. It should be understood that like reference numbers used in the drawings may identify like components.
Fig. 1 is a flow chart illustrating an exemplary method of license activation that can be utilized in a first exemplary embodiment of a licensing apparatus.
Fig. 2 is a schematic flow chart illustrating an exemplary communication sequence that can be utilized the first exemplary embodiment of the licensing apparatus to implement an embodiment of the method of license activation.
Fig. 3 is a schematic flow chart illustrating an exemplary communication sequence in accordance with Session Initiation Protocol (SIP) that can be utilized in the first exemplary embodiment of the licensing apparatus to implement an embodiment of the method of license activation.

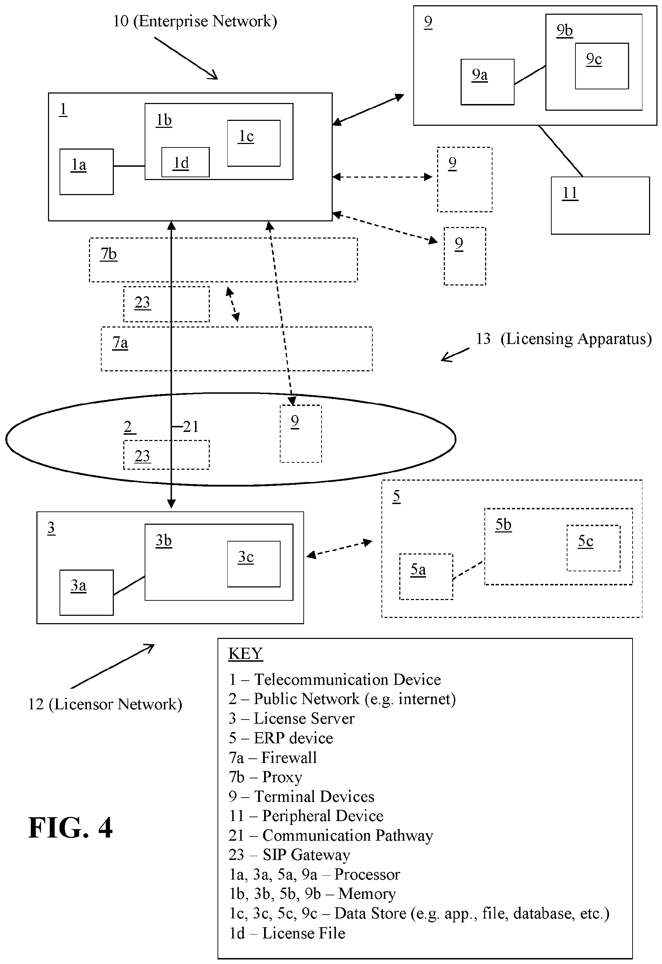

Fig. 4 is a block diagram of the first exemplary embodiment of a licensing apparatus. It should be appreciated that embodiments of the licensing apparatus 13 can include some, but not all of the elements illustrated in Fig. 4. For example, certain terminal devices 9, an exemplary firewall 7a, an exemplary proxy 7b and an exemplary SIP gateway 23 are shown in broken line to indicate that such elements may be optional elements in some embodiments of an enterprise network 10. An exemplary SIP gateway 23 is also shown in broken line as being within a public network 2 to illustrate that such an element (or multiple such elements) can be included in one or more public networks 2 positioned between a license server 3 and a telecommunication device 1. As another example, an exemplary enterprise resource planning device (ERP device 5) is shown in broken line to indicate that the ERP device 5 is an optional element in some embodiments of a licensor network 12. It should be understood that other embodiments of a licensing apparatus may include only a single device or may utilize different arrangements of devices.

### DETAILED DESCRIPTION OF EXEMPLARY EMBODIMENTS

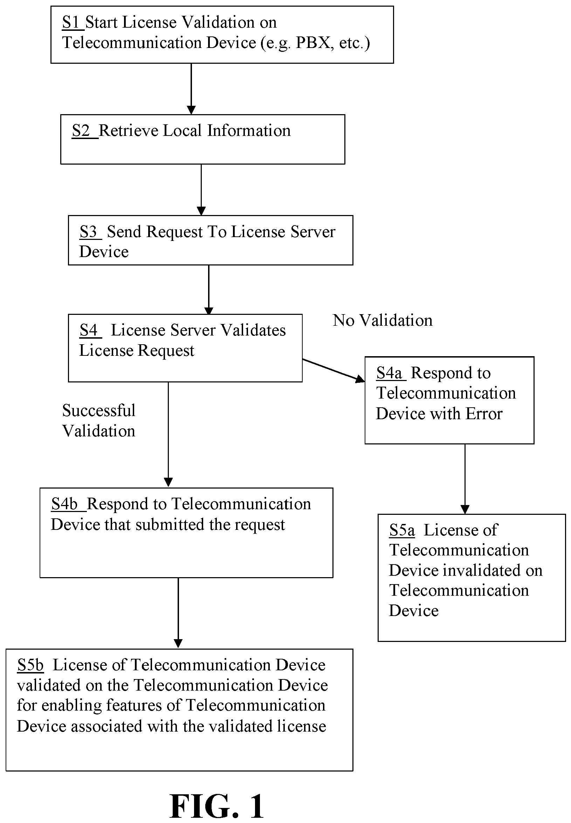

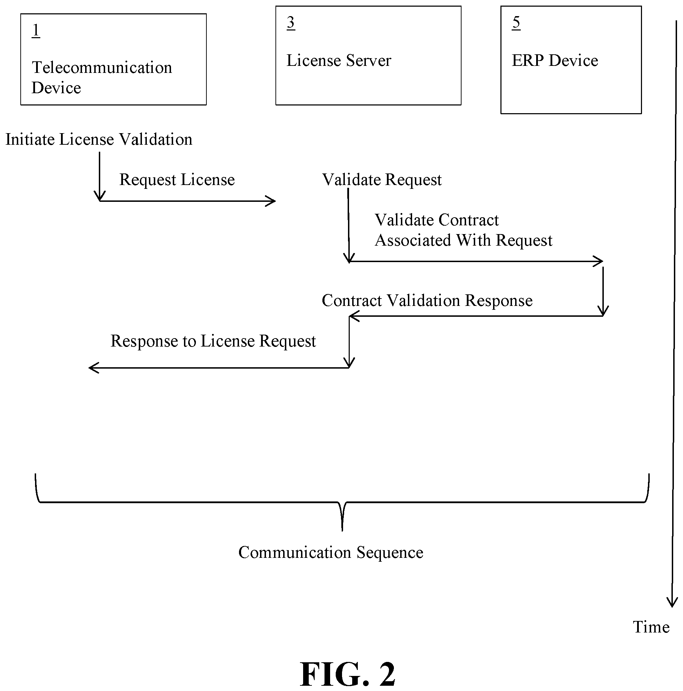

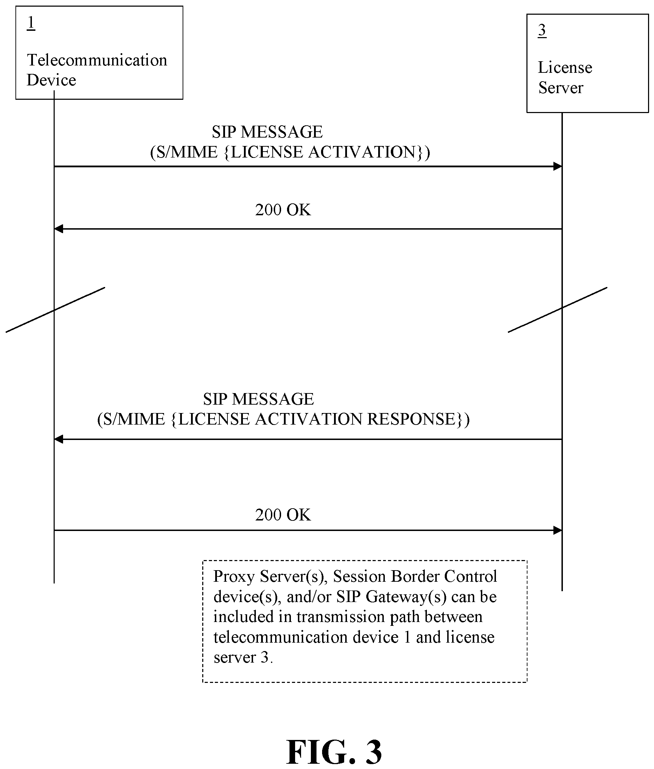

A licensing apparatus 13 can be configured as a single device or can be configured as an arrangement of multiple devices. An exemplary licensing apparatus 13 is shown in Fig. 4. The licensing apparatus 13 can be configured and arranged to implement an embodiment of a method of license activation as shown in Fig. 1. The implementation of the method may include use of the exemplary communication sequence shown in Fig. 2. This exemplary communication sequence can include messaging sent in accordance with Session Initiation Protocol (SIP). An example of such messaging that may be utilized in the exemplary communication sequence of Fig. 2 that is in accordance with SIP is shown in Fig. 3. It should be understood that the exemplary licensing apparatus 13 can also (or alternatively) be arranged and configured to utilize another embodiment of the license activation method and/or communication sequence.

The telecommunication device 1 or the license server 3 can have a non-transitory computer readable medium having code stored thereon that defines a method that is performed by a telecommunication device 1 or license server 3 when a processor of that device runs the code. The method that is performed via running of the code can be a method disclosed herein.

In some embodiments, the licensing apparatus 13 can include one or more networks of devices. For instance, the licensing apparatus 13 can include an enterprise network 10 and a licensor network 12 that are communicatively connectable via a public network 2 (e.g. the internet). The enterprise network 10 can be configured as a wide area network, a large area network, or a local area network. In some embodiments, the enterprise network may be a wide area network that includes multiple interconnected local area networks. The licensor network 12 can be also configured as a wide area network, a large area network, or a local area network. The public network 2 may be a network that is provided by one or more internet service providers or may be a collection of such networks. Each network can utilize wired and wireless communication connections for interconnecting different network elements (e.g. one or more wired trunks in addition to one or more wireless interface connections).

The enterprise network 10 can include at least one telecommunication device 1 that is communicatively connectable to at least one terminal device 9. Each terminal device 9 is a machine. Each terminal device can be a telephone, a personal computer, a desktop computer, a laptop computer, a smart phone, a personal digital assistant, a workstation, an electronic tablet, or another type of terminal device or end point. It should be appreciated that there can be multiple terminal devices 9 connected to the telecommunication device 1 in which some terminal devices are computers, others are telephones, and yet others are electronic tablets and/or smart phones. One or more server devices can also be connected to the telecommunication device 1. In some embodiments, each server device is configured as a terminal device 9.

Each terminal device 9 can be connectable to at least one peripheral device 11. Each peripheral device 11 can be an input device, an output device, or an input/output device. For example, a peripheral device 11 can be a touch screen monitor, a pointer device (e.g. a mouse or stylus), a keyboard, a printer, a display, a microphone, a speaker, or other type of peripheral device. Each peripheral device 11 can have a direct wired connection (e.g. a universal serial bus (USB) connection, etc.) or be wirelessly connected via a direct wireless connection (e.g. a Bluetooth connection or a near field communication (NFC) connection). A peripheral device 11 could also be connected via a local area network connection within the enterprise network (e.g. a WiFi connection or other type of local area network connection to a terminal device 9). Each terminal device 9 can include a processor 9a that is communicatively connected to a memory 9b. The memory 9b can be a non-transitory memory (e.g. flash memory, a solid state drive, a hard disk hard drive, a fixed disk hard drive, or other type of non-transitory computer readable medium). The memory 9b can store at least one data store 9c. The at least one data store 9c can include an application (also referred to as an "app." or "app") that has code that is run by the processor 9a so that the terminal device 9 performs a particular type of function or method. The at least one data store 9c can also include a database, a file (e.g. an image file, an audio file, a word processing document, a spreadsheet document, a video file, etc.) or other type of data store. The processor 9a can be a hardware element that is configured as a core processor, a microprocessor, a multiple core processor, a central processor unit (CPU) or other type of hardware processor.

The telecommunication device 1 can be a type of machine. The telecommunication device 1 can include a processor 1a that is connected to memory 1b. The memory 1b can be a non-transitory memory (e.g. flash memory, a solid state drive, a hard disk hard drive, a fixed disk hard drive, or other type of non-transitory computer readable medium). The memory 1b can store at least one data store 1c. The data store 1c can include an application defined by code that is run by the processor 1a so that the telecommunication device 1 performs a particular type of function or method. The one or more data stores 1c can also include a database, a file (e.g. an image file, an audio file, a word processing document, a spreadsheet document, a video file, etc.) or other type of data store. The processor 1a can be a hardware element that is configured as a core processor, a microprocessor, a multiple core processor, a central processor unit (CPU) or other type of hardware processor or array of such processors. The telecommunication device 1 can be configured as a private branch exchange (also referred to herein as a PBX), a call server, a conference server, a switch, or other type of network node within the enterprise network that hosts a service that is utilizable by one or more terminal devices 9 that are communicatively connectable to the telecommunication device within the enterprise network 10. It should be appreciated that one or more peripheral devices 11 can also be connected to the telecommunication device 1 as well. Each telecommunication device 1 can have multiple different interfaces. For example, each telecommunication device can have at least one interface for communication via Session Initiation Protocol (SIP) as well as at least one interface for transporting data via other types of communication protocols. The interfaces can include at least one interface configured for transmission of data via a wired communication link and/or at least one interface configured for transmission of data via a wireless communication link.

The enterprise network 10 can include one or more session border control devices. For example, the enterprise network 10 can be arranged and configured so that a firewall 7a is positioned to help isolate the enterprise network 10 from a public network 2, such as the internet or a network hosted by an internet service provider. The firewall 7a can be positioned so that the firewall is connected within the enterprise network so that transmissions of data into the enterprise network 10 must pass through the firewall 7a or be monitorable by the firewall 7a. In some embodiments, the firewall 7a may be communicatively connected to the telecommunication device 1, terminal devices 9 and/or proxy 7b in the enterprise network 10. In some embodiments, a gateway can be configured to provide firewall services and function as a firewall 7a. The firewall 7a can be configured to block some types of data transmissions from entering the enterprise network 10 and can also be configured to block communication of data a device within the enterprise network attempts to send out of the enterprise network 10. The firewall functions can be defined by a pre-determined set of rules or code that is stored in non-transitory memory of the firewall 7a so that at least one processor of the firewall 7a executes code so that the firewall 7a implements the set rules or a pre-defined method defined by the code stored on the memory of the firewall 7a.

The enterprise network 10 can also include at least one proxy 7b, which can be configured as a proxy server or other type of proxy computer device. Each proxy 7b is a machine. Each proxy 7b can be connected to multiple terminal devices 9 within the enterprise network 10 and/or at least one telecommunication device 1. Each proxy 7b can be configured to monitor communications of devices within the enterprise network to block pre-defined communications into, out of, and/or within the enterprise network 10. The functions of each proxy 7b can be defined by a pre-determined set of rules or code that is stored in non-transitory memory of the proxy 7b so that at least one processor of the proxy 7b executes code so that the proxy 7b implements the set rules or a pre-defined method defined by the code stored on the memory.

The licensor network 12 can include multiple nodes or multiple devices. For example, the licensor network 12 can include a license server 3. The license server 3 can be a central license server (also referred to as a CLS) or be one of a number of license servers 3 within the licensor network 12. In some embodiments, the licensor network 12 can include a server that hosts an "app" store service. The license server 3 can be communicatively connectable to an enterprise resource planning (ERP) device, ERP device 5. The ERP device 5 can be a device of an ERP system of the licensor network 12 that is configured to facilitate billing operations or support invoice tasks or invoice generation for different customers' use of one or more applications created, generated, distributed, and/or supported by the operator of the licensor network 12. Each such application can be installable on a telecommunication device 1 and/or terminal device 9 so that these devices can have a certain type of functionality or perform a particular function defined by the application for use of at least one service (e.g. a telecommunication service or a feature of such a service, etc.).

The license server 3 can be a type of machine (e.g. a computer device). The license server 3 can include a processor 3a that is connected to memory 3b. The memory 3b can be a non-transitory memory (e.g. flash memory, a solid state drive, a hard disk hard drive, a fixed disk hard drive, or other type of non-transitory computer readable medium). The memory 3b can store at least one data store 3c. The data store 3c can be an application is defined by code that is executed, or run, by the processor 3a so that the license server 3 performs a particular type of function or method. The one or more data stores 3c can also include a database, a file (e.g. an image file, an audio file, a word processing document, a spreadsheet document, a video file, etc.) or other type of data store. The processor 1a can be a hardware element that is configured as a core processor, a microprocessor, a multiple core processor, a central processor unit (CPU) or other type of hardware processor or array of such processors.

The license server 3 can have multiple different interfaces. For example, each license server 3 can have at least one interface for communication via Session Initiation Protocol (SIP) as well as at least one interface for transporting data via other types of communication protocols. For embodiments in which license activation messaging is to be transmitted in accordance with SIP, the license server 3 must have at least one interface for communication via SIP. The one or more interfaces of the license server 3 can include at least one interface configured for transmission of data via a wired communication link and/or at least one interface configured for transmission of data via a wireless communication link.

The ERP device 5 can also be a type of machine (e.g. a computer device). The ERP device 5 can include a processor 5a that is connected to memory 5b. The memory 5b can be a non-transitory memory (e.g. flash memory, a solid state drive, a hard disk hard drive, a fixed disk hard drive, or other type of non-transitory computer readable medium). The memory 5b can store at least one data store 5c. The data store 5c can be an application is defined by code that is executed, or run, by the processor 5a so that the ERP device 5 performs a particular type of function or method. The one or more data stores 5c can also include a database, a file (e.g. an image file, an audio file, a word processing document, a spreadsheet document, a video file, etc.) or other type of data store. The processor 5a can be a hardware element that is configured as a core processor, a microprocessor, a multiple core processor, a central processor unit (CPU) or other type of hardware processor or array of such processors.

Referring to Figures 1 and 2, embodiments of the licensing apparatus 13 can be configured to utilize a particular pre-selected communication sequence and/or method for license activation. The license activation operations can include generation of data that provide file contents for a license file 1d, distribution of the file contents for the license file 1d, validation of the file contents for license file 1d and/or the license file 1d generated from the transmitted file contents, and/or activation of that license file 1d. In some embodiments, the file contents of the license file 1d can be transmitted as an Extensible Markup Language (XML) structure within the body of one or more SIP MESSAGEs of the license request message received from a license server 3. The license activation operations can be designed to permit an application stored on the telecommunication device 1 to be run by that device so that one or more features of a service hosted by the telecommunication device 1 that is available when an application associated with the license file 1d is run by the telecommunication device 1 can be provided by that telecommunication device running the application, an update to the application, or an extension of the application code associated with the license file that is stored in memory 1b of the telecommunication device 1 and is operable upon activation of the license file. The license activation methodology that is utilized can be configured so that a firewall 7a, proxy 7b, or other enterprise network border control element is unable to block the license activation related communications between the telecommunication device 1 of the enterprise network 10 and license server 3 of the licensor network 12.

For the communications between a telecommunication device 1 and license server 3, the transmission path, or communication pathway 21, between these devices and connection(s) associated with this communication pathway 21 can be secured using encryption or other security feature. For example, connections can be secured using Transport Layer Security (TLS) or Multiplexed Transport Layer Security (MTLS). An end-to-end authentication mechanism can also be utilized for the communication pathway 21. Such an authentication mechanism can require use of credentials to provide an additional level of security for communications sent along the communication pathway 21 between the telecommunication device 1 and the license server 3. In some embodiments, Secure/Multipurpose Internet Mail Extensions (S/MIME) can be used to encrypt and secure the text and/or XML data that is transferred within the data packets and/or messages.

As can be appreciated from Figs. 1-4, embodiments can be configured so that the telecommunication device 1 may initiate a first step, S1, to start license validation via its processor 1a. It is contemplated that this initiation can be prompted in different ways to meet a particular set of design objectives (e.g. via input received from a system operator or via an automatic process defined by application code of an application when a new feature of the application is attempted to be used or when the application is being installed or updated on the telecommunication device 1). In response to initiation of the license validation process, the telecommunication device 1 can begin performing a second step S2, to facilitate the collection of data needed to request a license file or activation of a license file already stored on the memory 1b of the telecommunication device. This data can be collected automatically or can be collected via prompting a system administrator or other user to provide input (e.g. a particular code that may be associated with the license file for license activation, user identification information, etc.) for collection of such data. The collection of this data can be a retrieval of local information that is stored in the memory 1b of the telecommunication device 1 via the receipt of input from a user or via other data retrieval communications performed by the telecommunication device 1. The retrieved information can include host operating system network information (e.g. the Internet Protocol (IP) address, Domain Name System (DNS), Media Access Control (MAC) address, etc. for the telecommunication device 1). Once the needed information is retrieved by the telecommunication device 1, a third step S3 can be performed. In the third step S3, the telecommunication device can send a request to the license server 3 to request a license file or a validation of a license file already stored in the memory 1b of the telecommunication device 1. The request sent by the license server 3 can be addressed to a pre-selected or pre-defined address by use of an address of record associated with the license for the application or application upgrade the telecommunication device 1 seeks to validate.

The request sent in step S3 can be sent in a message that is defined to comply with a pre-selected communication protocol or pre-selected application layer protocol. The pre-selected communication protocol or pre-selected application layer protocol can be SIP. For example, the license request message can be structured as an SIP message (e.g. SIP MESSAGE) that is transmittable via an SIP trunk and/or SIP gateway 23 for transport to the license server 3 via a particular communication pathway 21 from the telecommunication device 1 to the license server 3 that requires data transport compliant with SIP. Such an SIP trunk and/or SIP gateway 23 is often mandatory in order to facilitate the making of external VoIP calls and such SIP infrastructure can exist even in the most secured and isolated enterprise network arrangements. In some embodiments, the communication pathway 21 can include infrastructure utilized for transmission of text messages, instant messages, or instant messaging via SIP.

In contrast, web services conventionally utilize Representational State Transfer (REST) protocol or Simple Object Access Protocol (SOAP) communication protocols, which are transported via the Hypertext Transfer Protocol (HTTP). We have found that the use of the HTTP communication protocol can allow outgoing messages associated with license file activation and/or generation to be blocked by enterprise network firewalls and/or proxies (e.g. via settings or firewall rules for such devices that are typically employed by enterprise network operators to restrict access to the enterprise network 10 and restrict outgoing communications output from the enterprise network 10).

We have determined that use of a license request message communication protocol that is pre-selected to avoid such firewall and proxy blocking functions can permit the license request to be communicated more efficiently and effectively. Embodiments using this approach can permit the licensing related communications to be transported into and out of the enterprise network 10 without detrimentally affecting the enterprise network's design configuration used to help isolate the enterprise network and protect that network. One such communication protocol we have determined to be suitable is SIP because the SIP trunk and/or SIP gateways are typically mandatorily present to facilitate VoIP communications via an enterprise network 10 for even very secure enterprise networks such as financial services operated enterprise networks or government organizational enterprise networks. Such SIP trunks and/or SIP gateways are typically present in an enterprise network and provide connections to public SIP session providers available via a public network 2 even in the most secured and isolated networks that have extensive restrictions on incoming and outgoing communications. We have surprisingly found that use of SIP for transporting a license request message allows the request message to be transmitted out of the enterprise network to the license server 3 via a reliable communication pathway 21, which can help avoid license fraud and can address license activation vulnerabilities so that license files cannot be improperly re-used for different applications that may be run on different devices within an enterprise network. This can also help adjust how licensing for at least one application or at least one application feature is provided so that a continuous validation of a license or a periodically repeated validation of a license can be required without detrimentally affecting the performance of the service provided by a properly licensed telecommunication device 1 running the application associated with the license (e.g. a regular, periodic validation that occurs at a pre-defined time interval (e.g. hourly, daily, weekly, etc.) can be required for use of an application or particular upgrade features of an application on a particular telecommunication device 1).

The license request message generated and sent by the telecommunication device 1 is structured as an SIP MESSAGE that has a header and a body. The SIP MESSAGE can be defined and structured in accordance with RFC 3428 (i.e. Campbell, B., et al., "Session Initiation Protocol (SIP) Extension for Instant Messaging", RFC 3428, December 2002, available at https://www.ietf.org/rfc/rfc3428.txt). The header includes the address of the license server 3 or another device of the licensor network 12 for routing of the request to the license server 3. The body of the SIP MESSAGE includes a body that is formatted to be compliant with SIP and also comply with the Multipurpose Internet Mail Extension (MIME) specification. In some embodiments, the body can be formatted to be compliant with the S/MIME specification. The MIME body (which can be configured as an S/MIME body) of the license request message can contain unique identification information needed for license activation, license file generation, and/or license file validation. This unique identification information included in the body of the license request message can be formatted as plain text or be in an XML format. This unique identification information can include the information the telecommunication device 1 retrieved or has stored locally (e.g. via input obtained from a user, via data stored locally on the memory 1b of the telecommunication device 1, etc.). File transfers may not be made via this process. But, we have developed a solution to such an issue. Any file data that is to be transferred for transferring of a file can be included in an XML structure within the body of one or more SIP MESSAGEs of the license request message that include the file content data for the file so that the license server 3 can receive that license file contents and generate the license file or other file from the transmitted XML structure(s).

Depending on available bandwidth for transmission of the license request message and the amount of unique identification information to be included in the license request message, it is contemplated that the telecommunication device 1 may send the license request message as a series of license request messages (e.g. a series of SIP MESSAGES, a plurality of SIP MESSAGES, etc.) sent to the license server 3 via the communication pathway 21 for step S3. Each separate message in the series of messages for the license request message can include information in the header or body to allow the license server 3 to appreciate the sequence in which the messages were sent, confirm receipt of the entirety of the unique information, and/or re-form the entirety of the unique information received from the telecommunication device 1 in a desired format or arrangement for subsequent use.

The license server 3 can receive the at least one license request message sent from the telecommunication device via the communication pathway 21. As shown in Fig. 3, the license server 3 may acknowledge receipt of the license request message via an acknowledgment message (e.g. an SIP OK 200 message) that is sent to the telecommunication device 1. The license server 3 can also evaluate the information included in the license request message to provide a license response message to the telecommunication device for responding to the license request message. The license response message provided by the license server 3 can be sent asynchronously at any time after the license request message is received.

For example, in response to receiving the license request message from the telecommunication device, the license server 3 can perform a fourth step S4 to validate the license or license file identified in the request message. In performing such validation, the license server may utilize data stored locally in its memory 3b and/or may communicate with ERP device 5 to validate the license associated with the unique information included in the license request message. Additionally, or as an alternative, the license server 3 may communicate with the ERP device 5 after receiving the license request message to communicate information relating to receipt of the request so that the receipt of the request and fulfilment of that request prompts the generation of invoice preparation at the ERP device so that billing a customer for the requested license can be automatically initiated.

If the validation is not possible due to the unique information of the license request message not sufficiently matching or corresponding to an applicable license, the license server 3 can perform a fifth step S4a and respond to the telecommunication device 1 that sent the license request message to identify an error in the unique information or other issue identified from the validation attempt. This response can be structured as at least one SIP MESSAGE that includes information within the body of the SIP MESSAGE that identifies the error (e.g. a single such message, a series of such messages that is structured to provide the full amount of data for the response, etc.). This response can include an XML structure that provides file content data so that the telecommunication device 1 can generate a file based on the received XML structure. The file that is generated can be structured so that the telecommunication device 1 may respond to receipt of the error message in a pre-selected way. For example, the telecommunication device 1 can invalidate a license file stored locally thereon or can facilitate generation of output to a user to identify the invalidation of the license to facilitate re-checking of the unique information included in the body of the license request message to address any errors that may have been present in response to receiving the license response message from the license server 3. Such a response can be performed in a sixth step S5a.

If the validation is possible and results in validation based on the unique information included in the license request, another step S4b of the method shown in Fig. 1 can be performed by the license server 3. Step S4b can be considered an alternative fifth step or a seventh step of the method shown in Fig. 1.

For instance, the license server 3 can send a license response message that is compliant with SIP (which is a type of application layer protocol) or other pre-selected communication protocol (or pre-selected application layer protocol) that is suitable for transmission along the communication pathway 21 from the license server 3 to the telecommunication device 1. In some embodiments, the header of such a response message can include the address of the telecommunication device 1 provided with the license request message sent by the telecommunication device 1 for routing the response to the telecommunication device 1 along a communication pathway 21 between the license server 3 and the telecommunication device 1.

As can be appreciated from Fig. 3, the license response message can be structured as an SIP MESSAGE that is defined and structured in accordance with RFC 3428. The license response message can include at least one SIP MESSAGE that is structured to provide a license file or validation information for a license file that may be stored locally on the memory 1b of the telecommunication device 1. For example, when the communication pathway prevents file transfer, the license file could be provided via license file contents for a license file 1d being included in an XML structure within the body of the SIP MESSAGE so that the telecommunication device 1 can generate the license file based on data provided via the XML structure(s) of the one or more SIP MESSAGEs of the license response message. As another example, validation information for a license file stored in the memory of the telecommunications device 1 can be included as plain text data or as an XML structure within a body of at least one SIP MESSAGE of the license response message (e.g. the body of an SIP MESSAGE that has a body that is defined in accordance with MIME, etc.). This license file content data or validation information can be based on the unique information included within the body of the license request message sent by the telecommunication device 1 and/or include validation result information that is generated based on the unique information received from the telecommunication device.

The telecommunication device 1 can acknowledge receipt of the license response message. For example, the telecommunication device 1 can send an SIP 200 OK message to the license server 3 in response to receiving the license response message as shown in Fig. 3. The telecommunication device 1 can also response to the license request message by validating the license after receiving the license response message in another step S5b of the method shown in Fig. 1. Step S5b can be considered an alternate sixth step or an eight step of the method shown in Fig. 1.

The validation of the license can include utilization of a license file included in the license response message and/or utilization of license file validation information included in the license response message to enable validation and/or activation of a license file 1d for the application or upgraded features of the application that are associated with the validated license information of the license response message. In embodiments in which the license file 1d is provided in the license response message, the license file may be transmitted via a series of license response messages that each include license file content data for the license file 1d so that the license file is downloadable to the telecommunication device 1 via the communication pathway 21 via multiple messages (e.g. for each of the series of messages, license file content data for the license file can be within an XML structure of the body of an SIP MESSAGE). The telecommunication device 1 can then utilize the XML structure(s) of the received SIP MESSAGE(s) to generate the license file 1d. In some embodiments, the license validation information can also be sent via multiple license response messages to account for bandwidth and message size constraints. In the event multiple messages are sent for the license response message, each separate message in the series of messages for the license response message can include information in the header or body to allow the telecommunication device 1 to appreciate the sequence in which the messages were sent, confirm receipt of the entirety of the license file or license file validation information, and/or re-form the entirety of the information or data received from the license server 3 in a desired format for enabling use of the application or upgraded features of the application.

In some embodiments of the licensing apparatus 13, the license file or application stored in memory 1b of a telecommunication device 1 can require the telecommunication device to periodically re-validate that the application is properly licensed for storage in the memory 1b and execution via the telecommunication device 1 of the enterprise network 10. For such embodiments, steps S 1 through S5b may be repeated periodically at pre-defined intervals. Such intervals may be hourly, daily, weekly, monthly, quarterly, yearly, or some other pre-defined interval. In such embodiments, the telecommunication device 1 may keep the license request information retrieved in step S2 stored locally in the memory 1b of the telecommunication device so that, upon the pre-selected time passing after a prior validation, the telecommunication device can immediately send a new license request message to the license server via communication pathway 21 without having to re-retrieve such information.

For example, in a continuous validation or regular validation configuration, the telecommunication device can send a second license request message to the license server. This second license request message can be sent after the initial validation of a license for use of an application or application upgrade has been performed via sending of a first license request message and receiving a validation response to that first license request message. The unique information included in the second license request message can be based on the information retrieved and/or collected when the initial first request message was sent that the telecommunication device 1 stored in its memory 1b. The license server 3 can be configured to validate that second request similar to its initial validation of the first request based on the validation information included in the second request message and subsequently send a second license response message to the telecommunication device. The second license response message can be similar in structure and content to the first license response message. In some embodiments, the validation information included in the second license response message may be different than what was included in the first license response message. In the event the license server is unable to re-validate the license in response to the second license response message (or another subsequently sent license response message), the license server 3 can send a license response message that includes information for disabling the application or upgrade features of the application so that such features or the entire application are no longer usable at the telecommunication device 1 after the telecommunication device 1 receives the second license response message.

From a security perspective, it is contemplated that it can be more secure to require the telecommunication device 1 to retrieve the license request information to validate that every application is correctly licensed. Using cached information or other stored information to send a new license request to re-validate the application (or multiple applications or features of one or more applications) may provide a backdoor for license fraud. Therefore, preferred embodiments can be configured to require the telecommunication device 1 to retrieve the license request information for generation of a license request message for generation of a license request message that is to be sent to re-validate the license prior to sending the new license request message (e.g. an SIP MESSAGE having license request data that is based off of the retrieved license request information). This retrieval of license request information may be required each time the re-validation is to occur (e.g. for each and every second license request message sent after the initial validation and enablement obtained via the first license request message).

It should be understood that that there may be many repeated iterations of the sending and receiving of license request and license response messages in embodiments of the licensing apparatus in which a continuous or periodic license validation methodology is employed. The communication sequence between the license server 3 and the telecommunication device 1 may repeat multiple times unless (or until) the license server is unable to validate a license for the received license request. For instance, the exemplary communication sequence of Fig. 2. and the use of the exemplary SIP messaging sequence shown in Fig. 3 that can be utilized in such a communication sequence can be repeated for each periodic validation occurrence (e.g. exchange of multiple second license request and second license response messages, or the exchange of second license request and response messages, third license request and response messages, fourth license request and response messages ... nth license request and response messages, etc.).

It should be appreciated that modifications to the embodiments explicitly shown and discussed herein can be made to meet a particular set of design objectives. For instance, the type of firewall 7a, the presence of one or more proxies 7b (e.g. proxy servers), the configuration of a particular telecommunication device 1 (e.g. PBX, conference server, call server, application hosting server, switch etc.), and the number of terminal devices 9 that may be communicatively connectable to the telecommunication device 1 can be any number or arrangement of such devices. Further, in some enterprise networks (e.g. an enterprise network that may be ad hoc in arrangement), one or more terminal devices 9 may be considered telecommunication devices 1 that communicate with a license server 3 and/or host services that are utilized by other terminal devices that are provided via one or more licensed applications that are run on those terminal devices 9. Embodiments of the enterprise network 10 can also include other nodes.

As another example, an arrangement of a licensor network 12 can include one or more access points, gateways, firewalls, routers, proxies, border control elements, or other nodes. As yet another example, the particular communication protocol utilized for the communication sequence to be performed between the license server 3, telecommunication device 1 and the ERP device 5 can be a particular pre-selected protocol that may be selected to avoid the communications being blocked by an enterprise firewall, proxy, or other type of border control device that is configured to isolate the enterprise network 10 from at least one public network 2. In some embodiments, the communication protocol may be SIP. It is contemplated that other embodiments may utilize another type of communication protocol.

As yet another example, it is contemplated that a particular feature described, either individually or as part of an embodiment, can be combined with other individually described features, or parts of other embodiments. The elements and acts of the various embodiments described herein can therefore be combined to provide further embodiments. Thus, while certain exemplary embodiments of the apparatus for license activation and methods of making and using the same have been shown and described above, it is to be distinctly understood that the invention is not limited thereto but may be otherwise variously embodied and practiced within the scope of the following claims.

## Claims

1. A method for validation of a license associated with an application (1c) stored on a non-transitory computer readable medium (1b) of a telecommunication device (1), comprising:
collecting, by the telecommunication device (1), license validation information for validation of a license associated with the application;
the telecommunication device (1) sending a license request message to a license server (3), the license request message comprising the collected license validation information,
**characterized in that**
the license request message is structured as a SIP MESSAGE that has a header and a body, wherein the header includes the address of the license server, and wherein the body includes a body that is formatted to be compliant with SIP and also with the Multipurpose Internet Mail Extension, MIME, specification.

2. The method of claim 1, comprising:
upon validation of the license based on the license validation information included in the license request message, the license server (3) sending a license response message to the telecommunication device (1) to enable use of the application (1c) or at least one upgrade feature of the application (1c), the license response message having license validation data based on the license validation information included in the license request message.

3. The method of claim 2, wherein the license request message is sent to the license server (3) in a format that complies with a pre-selected communication protocol so that the license request message is transmittable out of an enterprise network (10) in which the telecommunication device (1) is connected via a communication pathway (21) between the telecommunication device (1) and the license server (3) without being blocked by a firewall (7a) of the enterprise network (10) and/or a proxy (7b) of the enterprise network (10).

4. The method of claim 3, wherein the pre-selected communication protocol is Session Initiation Protocol, SIP.

5. The method of claim 3, wherein the pre-selected communication protocol is not a Hypertext Transfer Protocol, HTTP.

6. The method of claim 3, wherein the license response message is sent to the telecommunication device (1) in a format that complies with the pre-selected communication protocol so that the license response message is transmittable into the enterprise network (10) in which the telecommunication device (1) is connected via the communication pathway (21) between the telecommunication device (1) and the license server (3) without being blocked by the firewall (7a) of the enterprise network (10) and/or the proxy (7b) of the enterprise network (10).

7. The method of claim 6, wherein the pre-selected communication protocol is Session Initiation Protocol, SIP.

8. The method of claim 7, wherein the pre-selected communication protocol is not a Hypertext Transfer Protocol, HTTP.

9. The method of claim 6, wherein the communication pathway (21) includes at least one public network between the enterprise network and the license server (3), the communication pathway (21) including a SIP trunk and/or a SIP gateway (23).

10. The method of claim 2, wherein the telecommunication device (1) is a private branch exchange, PBX, a terminal device, or a server computer device.

11. The method of claim 10, wherein the license server (3) is a computer device having a processor (3a) connected to a non-transitory memory (3b) or a non-transitory computer readable medium (3b).

12. A non-transitory computer readable medium (1b) having code stored thereon, the code defining a method that is performed by a telecommunication device (1) when a processor (1a) of the telecommunication device (1) runs the code, the method being the method of claim 1.

13. A licensing system (13) comprising:
a license server (3), the license server having a processor (3a) connected to a non-transitory compute readable medium (3b), the license server communicatively connectable to at least one telecommunication device (1);
the license server (3) configured to respond to a license request message received from the telecommunication device (1) by using validation information included in the license request message to validate a license associated with an application or at least one feature of the application and, upon validation of the license based on the license validation information included in the license request message, send a license response message to the telecommunication device (1) to enable use of the application (1c) or at least one upgrade feature of the application (1c), the license response message having license validation data based on the license validation information included in the license request message,
the license server (3) configured to generate the license response message so the license response message is sendable to the telecommunication device (1) in a format that complies with a pre-selected communication protocol so that the license response message is transmittable into an enterprise network (10) in which the telecommunication device (1) is connected via a communication pathway (21) between the telecommunication device (1) and the license server (3) without being blocked by a firewall (7a) of the enterprise network (10) and/or a proxy (7b) of the enterprise network (10),
**characterized in that**
the license request message is structured as a SIP MESSAGE that has a header and a body, wherein the header includes the address of the license server, and wherein the body includes a body that is formatted to be compliant with SIP and also with the Multipurpose Internet Mail Extension, MIME, specification.

14. The licensing system of claim 13, comprising:
the telecommunication device (1), the telecommunication device (1) configured to send the license request message so that the license request message is sendable to the license server (3) in the format that complies with the pre-selected communication protocol so that the license request message is transmittable out of the enterprise network (10) in which the telecommunication device (1) is connected via the communication pathway (21) between the telecommunication device (1) and the license server (3) without being blocked by the firewall (7a) of the enterprise network (10) and/or the proxy (7b) of the enterprise network (10).

15. The licensing system of claim 14, wherein the pre-selected communication protocol is Session Initiation Protocol, SIP; and wherein the communication pathway (21) includes at least one public network (2) between the enterprise network (10) and the license server (3), the communication pathway (21) including a SIP trunk and/or a SIP gateway (23).

## Patentansprüche

1. Verfahren zur Validierung einer Lizenz, die mit einer Anwendung (1c) verbunden ist, die auf einem nicht-übertragbaren computerlesbaren Medium (1b) eines Telekommunikationsgeräts (1) gespeichert ist, umfassend:
Sammeln von Lizenzvalidierungsinformationen durch das Telekommunikationsgerät (1) zur Validierung einer mit der Anwendung verbundenen Lizenz;
Senden einer Lizenzanforderungsnachricht an einen Lizenzserver (3) durch das Telekommunikationsgerät (1), wobei die Lizenzanforderungsnachricht die gesammelten Lizenzvalidierungsinformationen enthält,
**dadurch gekennzeichnet, dass**
die Lizenzanforderungsnachricht als eine SIP MESSAGE strukturiert ist, die einen Header und einen Body aufweist, wobei der Header die Adresse des Lizenzservers enthält und wobei der Body einen Body enthält, der so formatiert ist, dass er mit dem SIP und auch mit der Multipurpose Internet Mail Extension, MIME, Spezifikation konform ist.

2. Verfahren nach Anspruch 1, umfassend:
bei der Validierung der Lizenz auf der Grundlage der in der Lizenzanforderungsnachricht enthaltenen Lizenzvalidierungsinformationen sendet der Lizenzserver (3) eine Lizenzantwortnachricht an das Telekommunikationsgerät (1), um die Verwendung der Anwendung (1c) oder mindestens einer Upgrade-Funktion der Anwendung (1c) zu ermöglichen, wobei die Lizenzantwortnachricht Lizenzvalidierungsdaten auf der Grundlage der in der Lizenzanforderungsnachricht enthaltenen Lizenzvalidierungsinformationen enthält.

3. Verfahren nach Anspruch 2, wobei die Lizenzanforderungsnachricht an den Lizenzserver (3) in einem Format gesendet wird, das einem vorausgewählten Kommunikationsprotokoll entspricht, so dass die Lizenzanforderungsnachricht aus einem Unternehmensnetzwerk (10), in dem das Telekommunikationsgerät (1) über einen Kommunikationspfad (21) zwischen dem Telekommunikationsgerät (1) und dem Lizenzserver (3) verbunden ist, übertragen werden kann, ohne von einer Firewall (7a) des Unternehmensnetzwerks (10) und/oder einem Proxy (7b) des Unternehmensnetzwerks (10) blockiert zu werden.

4. Verfahren nach Anspruch 3, wobei das vorausgewählte Kommunikationsprotokoll das Session Initiation Protocol, SIP, ist.

5. Verfahren nach Anspruch 3, wobei es sich bei dem vorausgewählten Kommunikationsprotokoll nicht um ein Hypertext Transfer Protocol, HTTP, handelt.

6. Verfahren nach Anspruch 3, wobei die Lizenzantwortnachricht an das Telekommunikationsgerät (1) in einem Format gesendet wird, das dem vorausgewählten Kommunikationsprotokoll entspricht, so dass die Lizenzantwortnachricht in das Unternehmensnetzwerk (10), in dem das Telekommunikationsgerät (1) über den Kommunikationspfad (21) zwischen dem Telekommunikationsgerät (1) und dem Lizenzserver (3) verbunden ist, übertragen werden kann, ohne von der Firewall (7a) des Unternehmensnetzwerks (10) und/oder dem Proxy (7b) des Unternehmensnetzwerks (10) blockiert zu werden.

7. Verfahren nach Anspruch 6, wobei das vorausgewählte Kommunikationsprotokoll das Session Initiation Protocol, SIP, ist.

8. Verfahren nach Anspruch 7, wobei es sich bei dem vorausgewählten Kommunikationsprotokoll nicht um ein Hypertext Transfer Protocol, HTTP, handelt.

9. Verfahren nach Anspruch 6, wobei der Kommunikationspfad (21) mindestens ein öffentliches Netzwerk zwischen dem Unternehmensnetzwerk und dem Lizenzserver (3) umfasst, wobei der Kommunikationspfad (21) einen SIP-Trunk und/oder ein SIP-Gateway (23) umfasst.

10. Verfahren nach Anspruch 2, wobei das Telekommunikationsgerät (1) eine Nebenstellenanlage, PBX, ein Endgerät oder ein Server-Computergerät ist.

11. Verfahren nach Anspruch 10, wobei der Lizenzserver (3) ein Computergerät mit einem Prozessor (3a) ist, der mit einem nicht-übertragbaren Speicher (3b) oder einem nicht-übertragbaren computerlesbaren Medium (3b) verbunden ist.

12. Nicht-übertragbares computerlesbares Medium (1b) mit darauf gespeichertem Code, wobei der Code ein Verfahren definiert, das von einem Telekommunikationsgerät (1) ausgeführt wird, wenn ein Prozessor (1a) des Telekommunikationsgeräts (1) den Code ausführt, wobei das Verfahren das Verfahren nach Anspruch 1 ist.

13. Lizenzsystem (13), umfassend:
einen Lizenzserver (3), wobei der Lizenzserver einen Prozessor (3a) aufweist, der mit einem nicht-übertragbaren computerlesbaren Medium (3b) verbunden ist, wobei der Lizenzserver kommunikativ mit mindestens einem Telekommunikationsgerät (1) verbindbar ist;
den Lizenzserver (3), der so konfiguriert ist, dass er auf eine von dem Telekommunikationsgerät (1) empfangene Lizenzanforderungsnachricht antwortet, indem er in der Lizenzanforderungsnachricht enthaltene Validierungsinformationen verwendet, um eine mit einer Anwendung oder mindestens einer Funktion der Anwendung verbundene Lizenz zu validieren, und bei der Validierung der Lizenz auf der Grundlage der in der Lizenzanforderungsnachricht enthaltenen Lizenzvalidierungsinformationen Senden einer Lizenzantwortnachricht an das Telekommunikationsgerät (1), um die Verwendung der Anwendung (1c) oder mindestens eines Upgrade-Features der Anwendung (1c) zu ermöglichen, wobei die Lizenzantwortnachricht Lizenzvalidierungsdaten auf der Grundlage der in der Lizenzanforderungsnachricht enthaltenen Lizenzvalidierungsinformationen aufweist,
den Lizenzserver (3), der so konfiguriert ist, dass er die Lizenzantwortnachricht erzeugt, so dass die Lizenzantwortnachricht in einem Format, das einem vorausgewählten Kommunikationsprotokoll entspricht, an das Telekommunikationsgerät (1) gesendet werden kann, so dass die Lizenzantwortnachricht in ein Unternehmensnetzwerk (10) übertragen werden kann, in dem das Telekommunikationsgerät (1) über einen Kommunikationspfad (21) zwischen dem Telekommunikationsgerät (1) und dem Lizenzserver (3) verbunden ist, ohne von einer Firewall (7a) des Unternehmensnetzwerks (10) und/oder einem Proxy (7b) des Unternehmensnetzwerks (10) blockiert zu werden,
**dadurch gekennzeichnet, dass**
die Lizenzanforderungsnachricht als eine SIP MESSAGE strukturiert ist, die einen Header und einen Body aufweist, wobei der Header die Adresse des Lizenzservers enthält und wobei der Body einen Body enthält, der so formatiert ist, dass er mit dem SIP und auch mit der Multipurpose Internet Mail Extension, MIME, Spezifikation konform ist.

14. Lizenzsystem nach Anspruch 13, umfassend:
das Telekommunikationsgerät (1), wobei das Telekommunikationsgerät (1) so konfiguriert ist, dass es die Lizenzanforderungsnachricht sendet, so dass die Lizenzanforderungsnachricht an den Lizenzserver (3) in dem Format gesendet werden kann, das dem vorausgewählten Kommunikationsprotokoll entspricht, so dass die Lizenzanforderungsnachricht aus dem Unternehmensnetzwerk (10), in dem das Telekommunikationsgerät (1) über den Kommunikationspfad (21) zwischen dem Telekommunikationsgerät (1) und dem Lizenzserver (3) verbunden ist, übertragen werden kann, ohne von der Firewall (7a) des Unternehmensnetzwerks (10) und/oder dem Proxy (7b) des Unternehmensnetzwerks (10) blockiert zu werden.

15. Lizenzsystem nach Anspruch 14, wobei das vorausgewählte Kommunikationsprotokoll das Session Initiation Protocol, SIP, ist; und
wobei der Kommunikationspfad (21) mindestens ein öffentliches Netzwerk (2) zwischen dem Unternehmensnetzwerk (10) und dem Lizenzserver (3) umfasst, wobei der Kommunikationspfad (21) einen SIP-Trunk und/oder ein SIP-Gateway (23) umfasst.

## Revendications

1. Procédé de validation d'une licence associée à une application (1c) stockée sur un support non transitoire lisible sur ordinateur (1b) d'un dispositif de télécommunication (1), comprenant :
la collecte, par le dispositif de télécommunication (1), d'informations de validation de licence pour la validation d'une licence associée à l'application ;
l'envoi d'un message de demande de licence à un serveur de licence (3) par le dispositif de télécommunication (1), le message de demande de licence comprenant les informations de validation de licence collectées,
**caractérisé en ce que**
le message de demande de licence est structuré comme un MESSAGE SIP comportant un entête et un corps, l'en-tête incluant l'adresse du serveur de licence, et le corps incluant un corps formaté pour être compatible compatible avec SIP et avec la spécification Multipurpose Internet Mail Extension, MIME.

2. Procédé selon la revendication 1, comprenant:
lors de la validation de la licence sur la base des informations de validation de licence incluses dans le message de demande de licence, le serveur de licence (3) envoie un message de réponse de licence au dispositif de télécommunication (1) pour permettre l'utilisation de l'application (1c) ou d'au moins une fonction de mise à niveau de l'application (1c), le message de réponse de licence contenant des données de validation de licence basées sur les informations de validation de licence incluses dans le message de demande de licence.

3. Procédé selon la revendication 2, dans lequel le message de demande de licence est envoyé au serveur de licence (3) dans un format conforme à un protocole de communication présélectionné, de sorte que le message de demande de licence puisse être transmis hors d'un réseau d'entreprise (10) dans lequel le dispositif de télécommunication (1) est connecté par une voie de communication (21) entre le dispositif de télécommunication (1) et le serveur de licence (3) sans être bloqué par un pare-feu (7a) du réseau d'entreprise (10) et/ou un proxy (7b) du réseau d'entreprise (10).

4. Procédé selon la revendication 3, dans lequel le protocole de communication présélectionné est le protocole d'initiation de session, SIP.

5. Procédé selon la revendication 3, dans lequel le protocole de communication présélectionné n'est pas un protocole de transfert hypertexte, HTTP.

6. Procédé selon la revendication 3, dans lequel le message de réponse à la licence est envoyé au dispositif de télécommunication (1) dans un format conforme au protocole de communication présélectionné, de sorte que le message de réponse à la licence puisse être transmis au réseau d'entreprise (10) dans lequel le dispositif de télécommunication (1) est connecté par la voie de communication (21) entre le dispositif de télécommunication (1) et le serveur de licences (3) sans être bloqué par le pare-feu (7a) du réseau d'entreprise (10) et/ou le proxy (7b) du réseau d'entreprise (10).

7. Procédé selon la revendication 6, dans lequel le protocole de communication présélectionné est le protocole d'initiation de session, SIP.

8. Procédé selon la revendication 7, dans lequel le protocole de communication présélectionné n'est pas un protocole de transfert hypertexte, HTTP.

9. Procédé selon la revendication 6, dans lequel la voie de communication (21) inclut au moins un réseau public entre le réseau d'entreprise et le serveur de licences (3), la voie de communication (21) incluant un tronc SIP et/ou une passerelle SIP (23).

10. Procédé selon la revendication 2, dans lequel le dispositif de télécommunication (1) est un autocommutateur privé, PBX, un terminal ou un serveur informatique.

11. Procédé selon la revendication 10, dans lequel le serveur de licence (3) est un dispositif informatique doté d'un processeur (3a) connecté à une mémoire non transitoire (3b) ou à un support non transitoire lisible par ordinateur (3b).

12. Support non transitoire lisible par ordinateur (1b) sur lequel est stocké un code, le code définissant un procédé exécuté par un dispositif de télécommunication (1) lorsqu'un processeur (1a) du dispositif de télécommunication (1) exécute le code, le procédé étant celui de la revendication 1.

13. Un système d'octroi de licences (13) comprenant
un serveur de licence (3), le serveur de licence ayant un processeur (3a) connecté à un support non transitoire lisible par ordinateur (3b), le serveur de licence pouvant être connecté de manière communicative à au moins un dispositif de télécommunication (1) ;
le serveur de licence (3) configuré pour répondre à un message de demande de licence reçu du dispositif de télécommunication (1) en utilisant les informations de validation incluses dans le message de demande de licence pour valider une licence associée à une application ou à au moins une fonction de l'application et, lors de la validation de la licence sur la base des informations de validation de la licence incluses dans le message de demande de licence, envoyer un message de réponse de licence au dispositif de télécommunication (1) pour permettre l'utilisation de l'application (1c) ou d'au moins une fonction de mise à niveau de l'application (1c), le message de réponse de licence contenant des données de validation de licence basées sur les informations de validation de licence incluses dans le message de demande de licence,
le serveur de licence (3) configuré pour générer le message de réponse à la licence de sorte que le message de réponse à la licence puisse être envoyé au dispositif de télécommunication (1) dans un format conforme à un protocole de communication présélectionné, de sorte que le message de réponse à la licence puisse être transmis dans un réseau d'entreprise (10) dans lequel le dispositif de télécommunication (1) est connecté par une voie de communication (21) entre le dispositif de télécommunication (1) et le serveur de licence (3) sans être bloqué par un pare-feu (7a) du réseau d'entreprise (10) et/ou un proxy (7b) du réseau d'entreprise (10),
**caractérisé en ce que**
le message de demande de licence est structuré comme un MESSAGE SIP comportant un entête et un corps, l'en-tête incluant l'adresse du serveur de licence, et le corps incluant un corps formaté pour être compatible avec SIP et avec la spécification Multipurpose Internet Mail Extension, MIME.

14. Le système d'octroi de licences selon la revendication 13, comprenant :
le dispositif de télécommunication (1), le dispositif de télécommunication (1) étant configuré pour envoyer le message de demande de licence de sorte que le message de demande de licence puisse être envoyé au serveur de licence (3) dans un format conforme au protocole de communication préétabli protocole de communication présélectionné, de sorte que le message de demande de licence puisse être transmis hors du réseau d'entreprise (10) dans lequel le dispositif de télécommunication (1) est connecté par la voie de communication (21) entre le dispositif de télécommunication (1) et le serveur de licence (3) sans être bloqué par le pare-feu (7a) du réseau d'entreprise (10) et/ou le proxy (7b) du réseau d'entreprise (10).

15. Le système de licence selon la revendication 14, dans lequel le protocole de communication présélectionné est le protocole d'initiation de session (SIP) ; et
la voie de communication (21) comprend au moins un réseau public (2) entre le réseau d'entreprise (10) et le serveur de licences (3), la voie de communication (21) incluant un tronc SIP et/ou une passerelle SIP (23).
